# EUROPEAN PATENT SPECIFICATION

(11) **EP 2 956 361 B1**
(45) Date of publication and mention of the grant of the patent: **29.03.2017**
(21) Application number: 14704577.7
(22) Date of filing: 13.02.2014
(51) Int. Cl.: B64D 11/04, B64D 11/00, B64D 11/06

(54) **AIRCRAFT**
FLUGZEUG
AVION

(30) Priority: 13.02.2013 US 201361764018 P
(43) Date of publication of application: 23.12.2015
(73) Proprietor: Sell Gmbh, 35745 Herborn (DE)
(72) Inventor: PARRY, Trystan, Cardiff, Wales CF118DZ (GB); DAOUT, Jean-Marie, Mukilteo, Washington 98275 (US); JIN, Zhao, Everett, Washington 98208 (US); PIERAMICO, Martin, Seattle, Washington 98199 (US)
(74) Representative: Grosse, Wolf-Dietrich Rüdiger
(86) International application number: PCT/EP2014/052858
(87) International publication number: WO 2014/125046

(56) References cited:
- WO-A1-2008/070835
- US-A1- 2007 018 046
- US-A1- 2007 233 433
- US-A1- 2009 261 200

## Description

The invention relates to an aircraft comprising at least one floor on which a plurality of seats is arranged, wherein furthermore at least one galley is arranged on the floor, wherein the galley comprises a plurality of carts and/or containers for food and/or beverages and/or other utensils, wherein the floor has a longitudinal axis which is oriented in the flight direction of the aircraft.

Aircraft galleys are well known in the art, as in document US 2009/0261200.

Aircraft galleys are well known in the art. The galley comprises a number of carts or containers for stowing food and beverages as well as other utensils. The available space for stowing carts is sometimes not used in a most efficient manner. This is a significant drawback as space in an aircraft is always limited and economical and environmental advantages can be taken when the space is used in an optimized way.

Currently, the different regions in an aircraft are regarded independently from another. Accordingly, so called "mid galleys" are designed as rectangular elements to optimize the space in the galley itself. At the other hand the arrangement of the seats especially in the business section is sometimes offset to provide the passenger with the available space as efficient as possible. At the transition between the different sections a dead space is created which cannot be used efficiently.

Thus, it is an object of the present invention to further develop an aircraft design with a galley in such a way that the available space for stowing carts and containers is used in an optimized manner. So, the limited space in an aircraft should be used as efficient as possible.

The solution of this object by the invention is characterized in that the galley has a receiving space for a plurality of carts and/or containers, wherein the receiving space has an extension in the direction of the longitudinal axis and wherein the extension varies in the direction horizontally and perpendicular to the longitudinal axis.

One possible design of this concept is characterized in that the extension of the receiving space is bigger in a center region of the galley than in the lateral region of the galley. In this case the galley has preferably a T-shaped design seen in a top plan view.

Another design is characterized in that the extension of the receiving space is bigger in a lateral region of the galley than in the center region of the galley. In this case the galley has preferably a U-shaped design seen in a top plan view.

The extension of the receiving space can comprise one or two sections with a smaller constant extension and one or two sections with a bigger constant extension. Here, a preferred solution provides that the extension in the bigger section is 1.5 times of the extension in the smaller section. Alternatively, the extension in the bigger section can be 2.0 times of the extension in the smaller section.

Furthermore, it can be provided that two levels are arranged in the galley for receiving and stowing carts and/or containers in two different heights. In this case elevator means can be provided to lift a cart and/or container to the upper level.

Furthermore, pulling means can be provided to pull a cart and/or container out of the receiving space. The pulling means can also be designed to clamp the cart and/or container in the receiving space. Here, a preferred solution provides that the pulling means are designed for a combined translational and rotational movement to move the cart and/or container by the translational movement of the means and to clamp it by the rotational movement of the means.

A specific solution comes up with a galley having a T-shaped design seen in a top plan view which is arranged adjacent to a galley having a U-shaped design seen in a top plan view.

A first galley and a second galley can be arranged with distance in the direction of the longitudinal axis, wherein a plurality of seats is arranged between the two galleys. In this case it is preferred that the first galley in a forward location has a U-shaped design seen in a top plan view and that the second galley in a rear location has a T-shaped design seen in a top plan view.

Preferably, the galley is arranged in a center area of the floor.

Thus, the invention suggests that the shape of the galley is adapted according to the arrangement of the seat. So, the space on the floor can be used in a more efficient manner. Accordingly, due to the orientation of the galley different designs are possible.

According to the invention it becomes possible that additional carts or containers are stowed in the galley in a center region of the galley (T-shape of the galley in a top plan view) or in the lateral regions of the galley (U-shape of the galley in a top plan view).

Also a L-shaped design of the galley is possible; this design is mostly used when a galley is arranged near the doors. Also here, additional space for carts can be established.

Thus, a transition space between seating monumentand galleys can be utilized to extend the galley and increase the capacity for stowing carts (trolley, inserts) and containers.

In the case of the U-shape the galley is extended parallel to the centerline of the aircraft, the passengers in the center being bordered by a galley on both sides.

In the case of the T-shape the galley is extended parallel to the centerline of the aircraft, the passengers in the left hand area and the right hand area being bordered by the extension of the galley on the centerline of the aircraft.

The side monuments can also be used to store carts (trolleys) and be converted in effect in a small galley.

"Full depth carts" and "half depth carts" can be used. I. e., depending on the seat configuration the extension of the "T" can be full depth (full size carts/trolleys can be fitted) and half depth (half size carts/trolleys can be fitted).

A carts/trolley lift system can further augment the galley capacity by adding a second layer of trolleys in the extension of the "T".

In the drawings embodiments of the invention are shown.
- Fig. 1: shows a top plan view onto a part of a floor of an aircraft with seats and galleys,
- Fig. 2: shows a view onto the galley according to a possible embodiment of the invention,
- Fig. 3: shows a perspective view onto the galley seen from the position of the passengers,
- Fig. 4: shows a perspective view onto the galley according to Fig. 3 seen from behind,
- Fig. 5: shows a top plan view onto a part of the floor of the aircraft, wherein an alternative galley concept is realized,
- Fig. 6: shows a perspective view onto the galley according to an alternative embodiment of the invention seen from behind,
- Fig. 7: shows a perspective view onto the galley according to Fig. 6 seen from the position of the passengers,
- Fig. 8a: shows a top view onto a galley,
- Fig. 8b: shows a front view onto the galley according to Fig. 8a,
- Fig. 8c: shows a side view onto the galley according to Fig. 8a,
- Fig. 8d: shows a bottom view onto the galley according to Fig. 8a,
- Fig. 9: shows a top plan view onto a part of the floor of the aircraft, wherein the galley consists of different element,
- Fig. 10: shows a top view onto a galley,
- Fig. 11: shows the top view onto the galley with pulling means for pulling out a cart,
- Fig. 12: shows a cart pulled out by means of the pulling means,
- Fig. 13: shows a part of a galley, wherein pulling means are depicted for pulling out a cart,
- Fig. 14: shows a similar depiction as in Fig. 13,
- Fig. 15: shows a galley with a T-shaped configuration with a full depth extension for carts,
- Fig. 16: shows a corresponding galley with a T-shaped configuration with a half depth extension for carts,
- Fig. 17: shows another galley with a T-shaped configuration with a full depth extension for carts,
- Fig. 18: shows a corresponding galley with a T-shaped configuration with a half depth extension for carts,
- Fig. 19: shows a further other galley with a T-shaped configuration with a full depth extension for carts,
- Fig. 20: shows a corresponding galley with a T-shaped configuration with a half depth extension for carts,
- Fig. 21: shows a side view of a galley with a T-shaped configuration with a full depth extension for carts,
- Fig. 22: shows a corresponding galley with a T-shaped configuration with a half depth extension for carts,
- Fig. 23: shows a top plan view of a galley with a T-shaped configuration with a full depth extension for carts and
- Fig. 24: shows a corresponding galley with a T-shaped configuration with a half depth extension for carts.

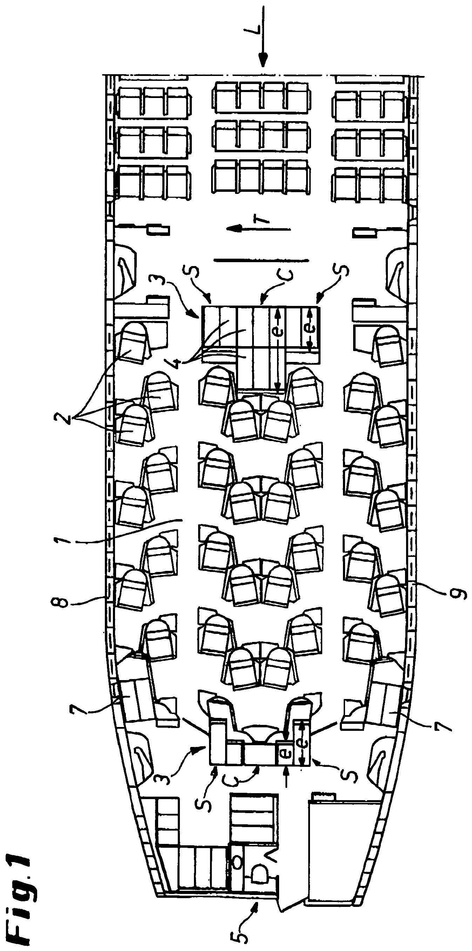

In Fig. 1 a top plan view of an aircraft floor 1 is shown; on the floor 1 a plurality of seats 2 is arranged in known manner. The floor 1 is delimited laterally by side walls 8 and 9. The floor 1 and the aircraft respectively have a longitudinal axis L which extends in the longitudinal direction of the aircraft.

Furthermore, two galleys 3 - one in the (left) front region of the floor 1 and one in (right) center region of the floor 1 - are arranged in the center area 5 of the floor 1.

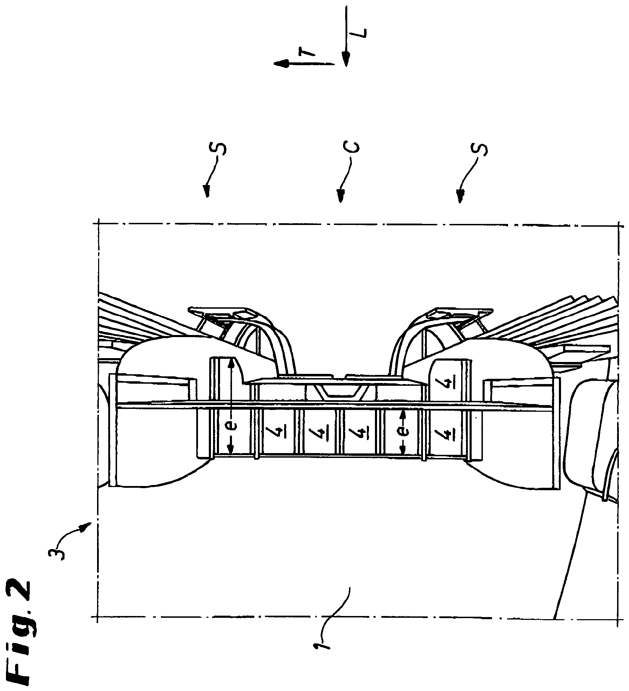

For both galleys 3 it applies that the galley 3 has a receiving space for a plurality of carts and containers 4 respectively, see Fig. 2. The receiving space has an extension e in the direction of the longitudinal axis L. Furthermore, the extension e varies in the direction T horizontally and perpendicular to the longitudinal axis L.

Due to the different extension of the receiving space "half size carts" and "full size carts" can be stowed accordingly.

Thereby, the carts can be arranged on the floor, while additional space for stowing is available above the carts.

A design which results from this concept is apparent from Fig. 2. Here is can be seen that the extension e of the receiving spaces for carts 4 is small in the center region C of the galley 3, while it is big in the lateral regions S of the galley 3. Thus, the U-shaped design is given as can be seen in Fig. 2.

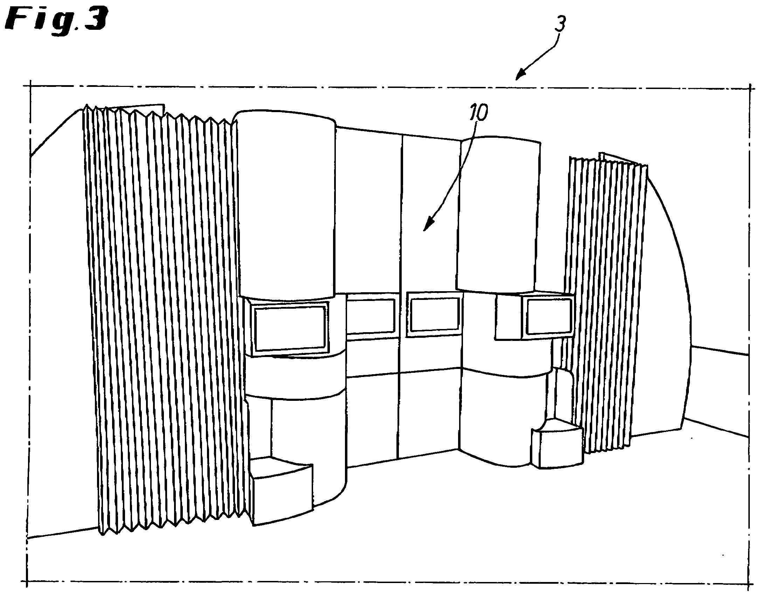

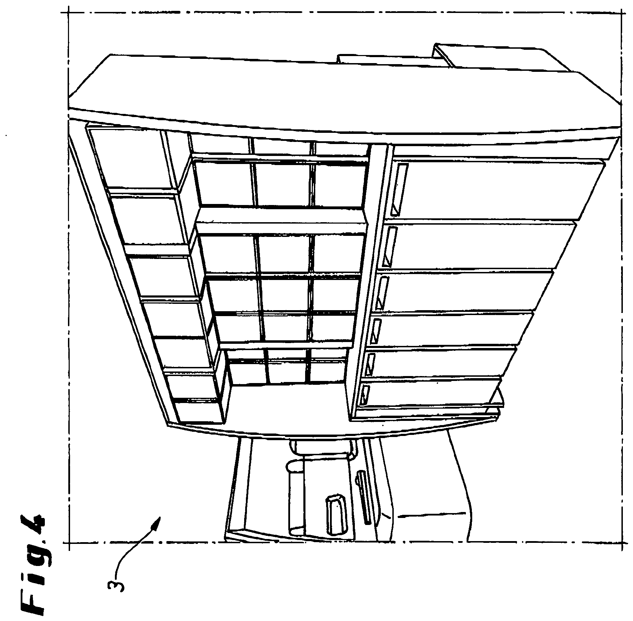

The view which is seen from the seats 2, i. e. from the passengers, is shown in Fig. 3. A seat monument 10 is visible. Fig. 4 shows the galley 3 from the rear side.

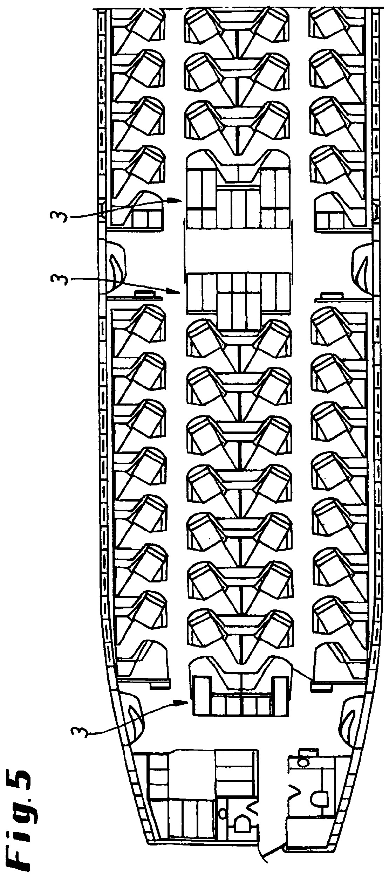

In Fig. 5 a concept is depicted where two galleys 3 are arranged adjacent in the middle region of the floor; a further (left) galley 3 is arranged in the front region of the floor 1. The two adjacent galleys 3 have a specific design, namely a T-shaped top plan view (left one of the two adjacent galleys 3) and a U-shaped top plan view (right one of the two adjacent galleys 3). An aisle between the two galleys 3 remains.

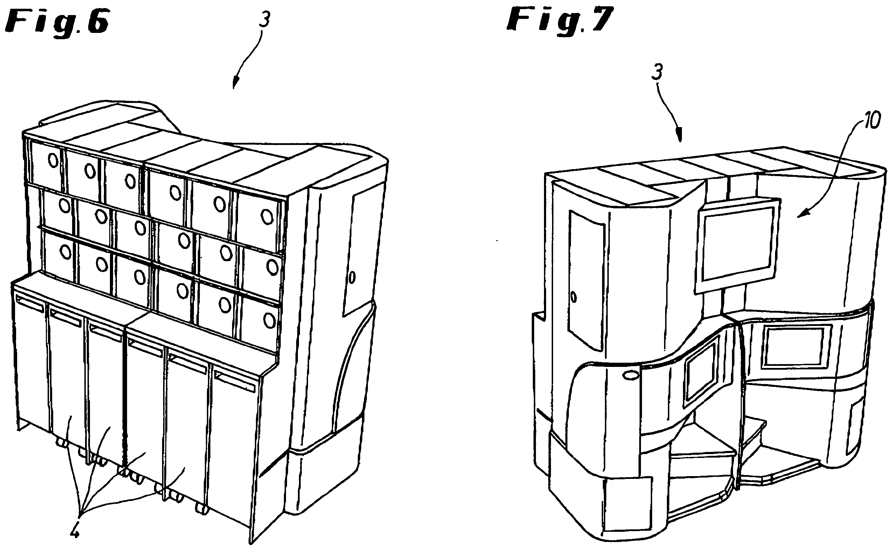

In Fig. 6 and Fig. 7 a U-shaped galley 3 is shown from the rear side (Fig. 6) and from the front side (Fig. 7) as the passengers see it with a seat monument.

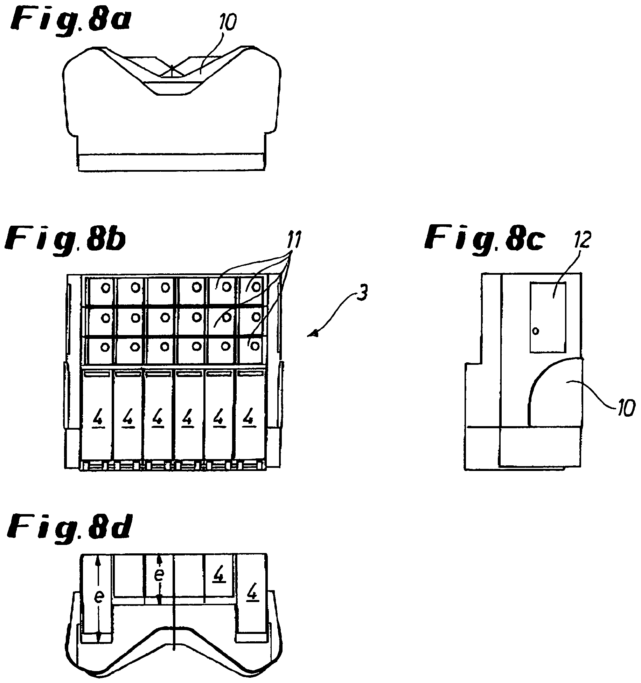

In Fig. 8a to 8d the galley 3 according to figures 6 and 7 is shown in a top plan view, a front view, a side view and a bottom view. The seat monument 10 is visible for the passengers. The galley 3 has receiving space for carts 4 as well as for containers 11. Storage space 12 is also available.

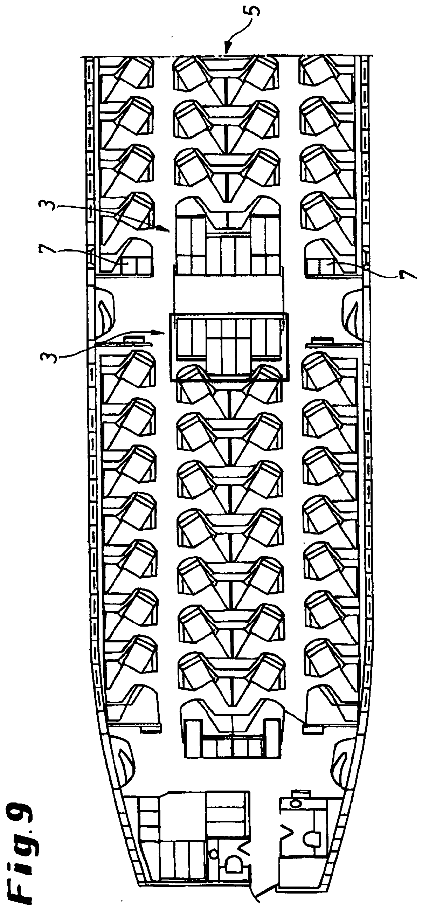

In Fig. 9 it can be seen that also lateral galley sections 7 can be provided beside the galley or galleys in the center area 5 of the floor 1.

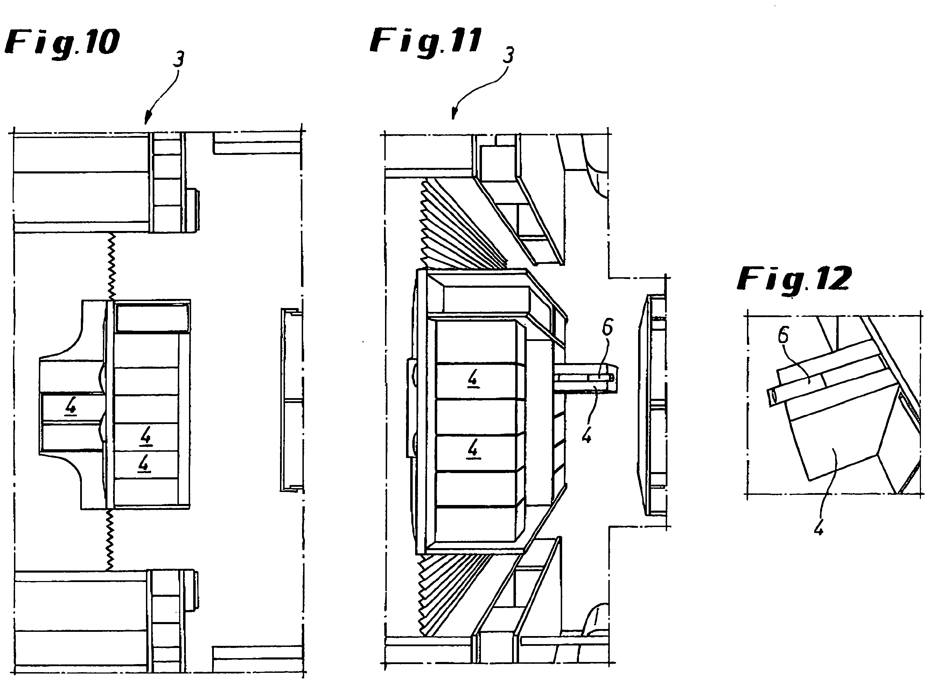

From figures 10 to 12 it becomes apparent that pulling means 6 can be employed to pull out carts 4 from the receiving space in the galley 3. This facilitates to pull out the carts 4 which are arranged in the elongated extension of the receiving space. Also the pulling means can be used for pushing a cart 4 back in the receiving space after use.

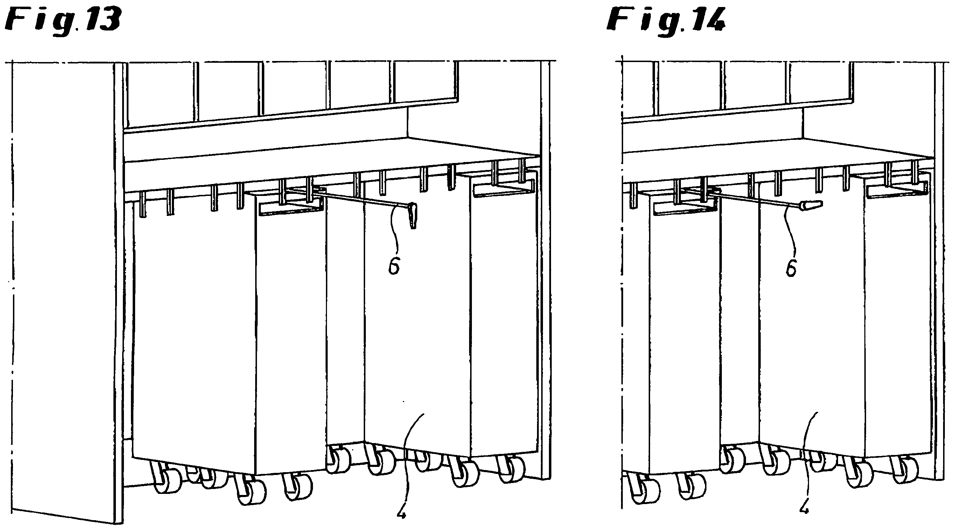

Another design of the pulling means 8 are shown in figures 13 and Fig. 14. The pulling means 6 are here rod-shaped. A further feature of the pulling means is that the pulling means 6 according to the embodiment of figure 13 and 14 can be rotated along their longitudinal axis to clamp the cart 4 in the receiving space by twisting. So, the cart 4 can be locked in the position as shown in one of figures 13 and 14 and can be pulled in the position which is shown in the other of the two mentioned figures.

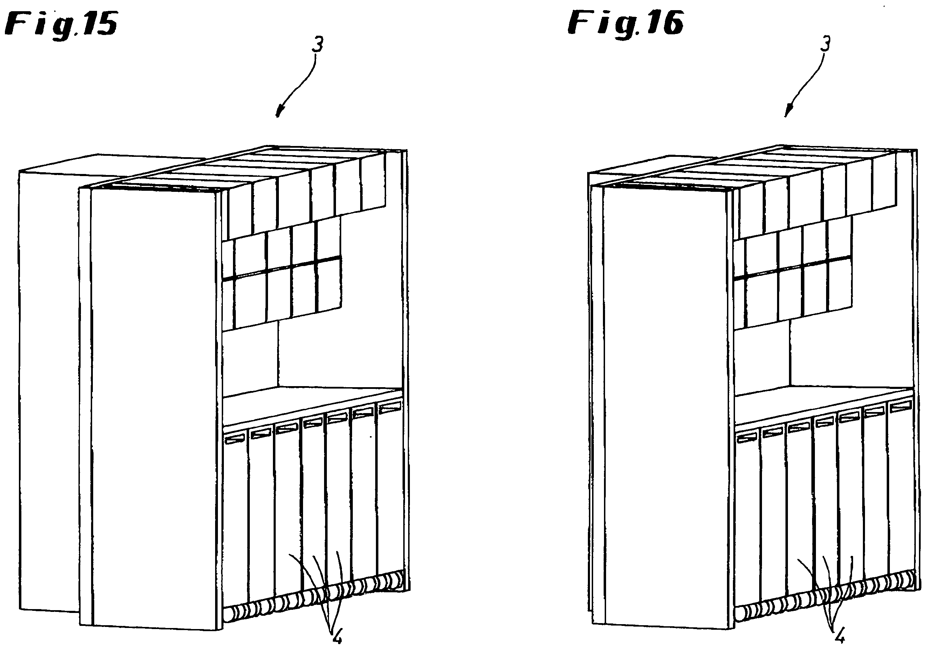

In Fig. 15 to 24 different other embodiments of the galley according to the invention are depicted.

In Fig. 15 and Fig. 16 a galley 3 is depicted which has a T-shape in a top plan view. In Fig. 15 a "full depth" arrangement is shown, i. e. here in the extended portion of the galley 3 two full shaped carts 4 can be pushed in one after another. In Fig. 16 a "half depth" arrangement is shown; that means that a cart 4 having only 50 % of the regular extension can be pushed in the receiving space of the galley 3.

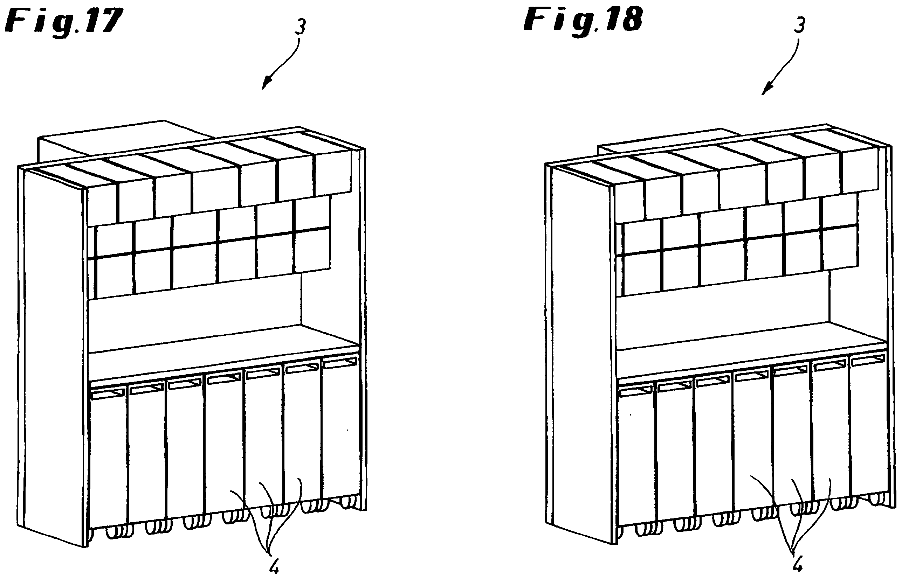

A similar design is shown in Fig. 17 and Fig. 18. Fig. 17 shows the "full depth" arrangement, Fig. 18 the "half depth" arrangement for a T-shaped galley 3.

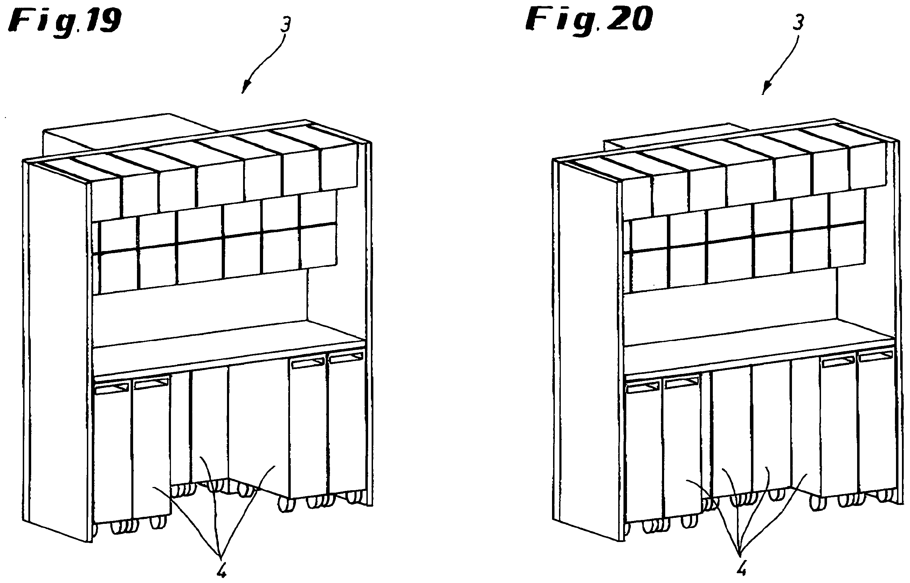

Again, another similar design is shown in Fig. 19 and Fig. 20. Fig. 19 shows the "full depth" arrangement, Fig. 20 the "half depth" arrangement for a T-shaped galley 3.

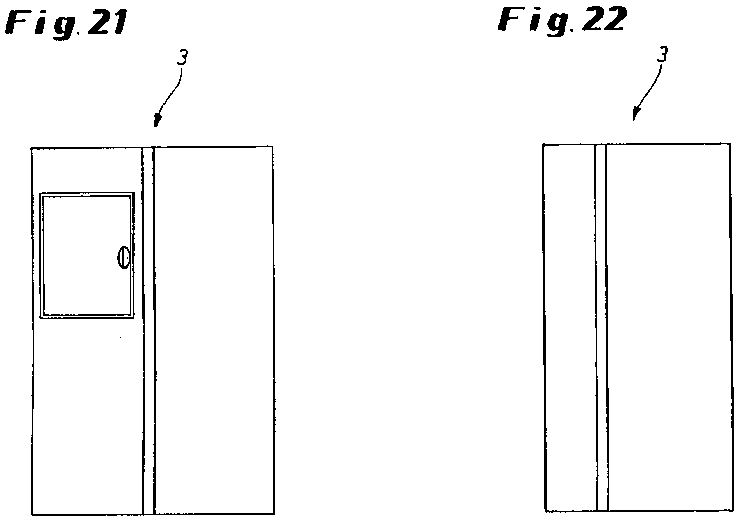

The "full depth" arrangement and the "half depth" arrangement become especially apparent in Fig. 21 and Fig. 22. The "full depth" arrangement according to Fig. 21 has double the extension of a cart, while the "half depth" arrangement according to Fig. 22 has 1.5-times the extension of a cart.

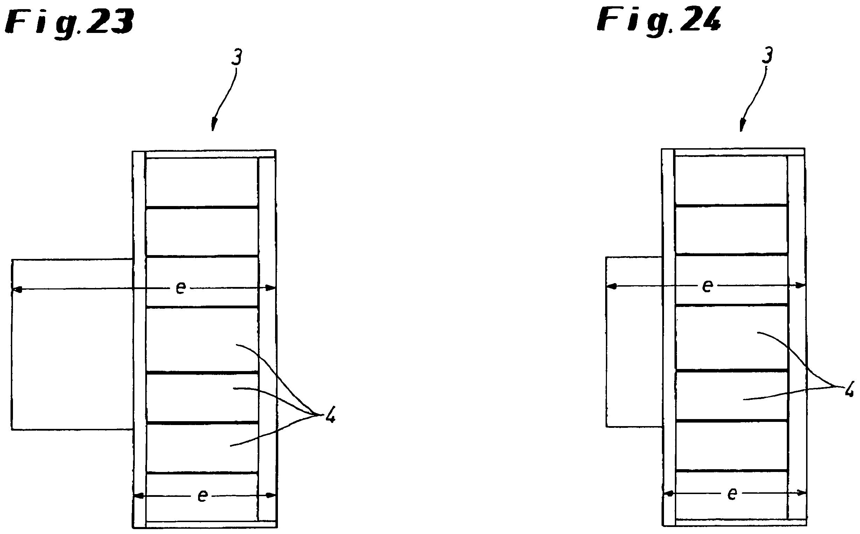

This arrangement is also apparent in Fig. 23 and Fig. 24. In Fig. 23 the top plan view onto a T-shaped galley 3 is depicted. As can be seen the big extension e is twice of the small extension e. With respect to Fig. 24 it can be seen that the big extension e is about 1.5 times of the small extension e. Thus, in the enlarged part of the galley 3 two carts 4 can be arranged, wherein one cart 4 has a regular extension and the other cart has an extension of only 50 % of it.

The specific design of the galley 3 with its enlarged sections depends on the arrangement of the seats on the floor.

Due to the proposed concept additional stowing space is created for the galley. So, at another location space for arranging additional seats is developed. The degree of utilization of the aircraft can thus be enhanced, i. e. more passengers can be transported.

### List of References:

- 1: Floor
- 2: Seat
- 3: Galley
- 4: Cart / Container
- 5: Center area
- 6: Pulling means
- 7: Lateral galley section
- 8: Side wall
- 9: Side wall
- 10: Seat monument
- 11: Container
- 12: Storage space

- e: Extension
- L: Longitudinal axis of the floor
- T: Direction horizontally and perpendicular to the longitudinal axis
- C: Center region of the galley
- S: Lateral region of the galley

## Claims

1. Aircraft comprising at least one floor (1) on which a plurality of seats (2) is arranged, wherein furthermore at least one galley (3) is arranged on the floor (1), wherein the galley (3) comprises a plurality of carts and/or containers (4) for food and/or beverages and/or other utensils, wherein the floor (1) has a longitudinal axis (L) which is oriented in the flight direction of the aircraft,
wherein
the galley (3) has a receiving space for a plurality of carts and/or containers (4), wherein the receiving space has an extension (e) in the direction of the longitudinal axis (L) and wherein the extension (e) varies in the direction (T) horizontally and perpendicular to the longitudinal axis (L), wherein the extension (e) of the receiving space comprises one or two sections with a smaller constant extension (e) and one or two sections with a bigger constant extension (e) and that
the extension (e) in the bigger section is at least 1.5 times of the extension (e) in the smaller section and wherein the seats are arranged in a V-configuration in such a manner that the galley's bigger section extending in the longitudinal direction protrudes in the space between the seats, or that the seats protrude into the space between two galley smaller sections extending in the longitudinal direction .

2. Aircraft according to claim 1, **characterized in that** the extension (e) of the receiving space is bigger in a center region (C) of the galley (3) than in the lateral region (S) of the galley (3).

3. Aircraft according to claim 2, **characterized in that** the galley (3) has a T-shaped design seen in a top plan view.

4. Aircraft according to claim 1, **characterized in that** the extension (e) of the receiving space is bigger in a lateral region (S) of the galley (3) than in the center region (C) of the galley (3).

5. Aircraft according to one of claims 1 to 4, **characterized in that** the extension (e) in the bigger section is 2.0 times of the extension (e) in the smaller section.

6. Aircraft according to one of claims 1 to 5, **characterized in that** two levels are arranged in the galley (3) for receiving and stowing carts and/or containers (4) in two different heights.

7. Aircraft according to claim 6, **characterized in that** elevator means are provided to lift a cart and/or container (4) to the upper level.

8. Aircraft according to one of claims 1 to 7, **characterized in that** pulling means (6) are provided to pull a cart and/or container (4) out of the receiving space.

9. Aircraft according to claim 8, **characterized in that** the pulling means (6) are also designed to clamp the cart and/or container (4) in the receiving space.

10. Aircraft according to claim 9, **characterized in that** the pulling means (6) are designed for a combined translational and rotational movement to move the cart and/or container (4) by the translational movement of the means and to clamp it by the rotational movement of the means.

11. Aircraft according to one of claims 1 to 10, **characterized in that** a galley (3) having a T-shaped design seen in a top plan view is arranged adjacent to a galley (3) having a U-shaped design seen in a top plan view.

12. Aircraft according to one of claims 1 to 11, **characterized in that** a first galley (3) and a second galley (3) are arranged with distance in the direction of the longitudinal axis (L), wherein a plurality of seats (2) is arranged between the two galleys (3).

13. Aircraft according to claim 12, **characterized in that** the first galley (3) in a forward location has a U-shaped design seen in a top plan view and that the second galley (3) in a rear location has a T-shaped design seen in a top plan view.

14. Aircraft according to one of claims 1 to 13, **characterized in that** the galley (3) is arranged in a center area (5) of the floor (1).

## Patentansprüche

1. Luftfahrzeug, das mindestens einen Boden (1) umfasst, auf dem eine Mehrzahl von Sitzen (2) angeordnet ist, wobei ferner mindestens eine Bordküche (3) auf dem Boden (1) angeordnet ist, wobei die Bordküche (3) eine Mehrzahl von Wagen und/oder Behältern (4) für Lebensmittel und/oder Getränke und/oder andere Utensilien umfasst, wobei der Boden (1) eine Längsachse (L) aufweist, die in der Flugrichtung des Luftfahrzeugs ausgerichtet ist, wobei
die Bordküche (3) einen Aufnahmeraum für eine Mehrzahl von Wagen und/oder Behältern (4) aufweist, wobei der Aufnahmeraum eine Erweiterung (e) in der Richtung der Längsachse (L) aufweist, und wobei die Erweiterung (e) in der Richtung (T) horizontal und senkrecht zu der Längsachse (L) variiert, wobei die Erweiterung (e) des Aufnahmeraums einen oder zwei Abschnitte mit einer kleineren konstanten Erweiterung (e) und einen oder zwei Abschnitte mit einer größeren konstanten Erweiterung (e) umfasst, und dass
die Erweiterung (e) in dem größeren Abschnitt mindestens 1,5-mal so groß wie die Erweiterung (e) in dem kleineren Abschnitt ist, und wobei die Sitze auf eine derartige Weise in einer V-Anordnung angeordnet sind, dass der größere Abschnitt der Bordküche, der sich in der Längsrichtung erstreckt, in den Raum zwischen den Sitzen hineinragt, oder dass die Sitze in den Raum zwischen zwei kleineren Bordküchenabschnitten hineinragen, die sich in der Längsrichtung erstrecken.

2. Luftfahrzeug nach Anspruch 1, **dadurch gekennzeichnet, dass** die Erweiterung (e) des Aufnahmeraums in einem mittleren Bereich (C) der Bordküche (3) größer als in dem seitlichen Bereich (S) der Bordküche (3) ist.

3. Luftfahrzeug nach Anspruch 2, **dadurch gekennzeichnet, dass** die Bordküche (3) in einer Draufsicht eine T-förmige Gestaltung aufweist.

4. Luftfahrzeug nach Anspruch 1, **dadurch gekennzeichnet, dass** die Erweiterung (e) des Aufnahmeraums in einem seitlichen Bereich (S) der Bordküche (3) größer als in dem mittleren Bereich (C) der Bordküche (3) ist.

5. Luftfahrzeug nach einem der Ansprüche 1 bis 4, dadurch gekenntzeichnet, dass die Erweiterung (e) in dem größeren Abschnitt 2,0-mal so groß wie die Erweiterung (e) in dem kleineren Abschnitt ist.

6. Luftfahrzeug nach einem der Ansprüche 1 bis 5, **dadurch gekennzeichnet, dass** in der Bordküche (3) zwei Ebenen zum Aufnehmen und Verstauen von Wagen und/oder Behältern (4) in zwei verschiedenen Höhen angeordnet sind.

7. Luftfahrzeug nach Anspruch 6, **dadurch gekennzeichnet, dass** Aufzugmittel bereitgestellt sind, um einen Wagen und/oder Behälter (4) auf die obere Ebene zu heben.

8. Luftfahrzeug nach einem der Ansprüche 1 bis 7, **dadurch gekennzeichnet, dass** Zugmittel (6) bereitgestellt sind, um einen Wagen und/oder Behälter (4) aus dem Aufnahmeraum herauszuziehen.

9. Luftfahrzeug nach Anspruch 8, **dadurch gekennzeichnet, dass** die Zugmittel (6) außerdem derart gestaltet sind, dass sie den Küchenwagen und/oder Behälter (4) in dem Aufnahmeraum feststellen.

10. Luftfahrzeug nach Anspruch 9, **dadurch gekennzeichnet, dass** die Zugmittel (6) für eine kombinierte translationale und Drehbewegung gestaltet sind, um den Wagen und/oder Behälter (4) mithilfe der translationalen Bewegung des Mittels zu bewegen und ihn mithilfe der Drehbewegung des Mittels festzustellen.

11. Luftfahrzeug nach einem der Ansprüche 1 bis 10, **dadurch gekennzeichnet, dass** eine Bordküche (3) mit einer T-förmigen Gestaltung in einer Draufsicht einer Bordküche (3) mit einer U-förmigen Gestaltung in einer Draufsicht benachbart angeordnet ist.

12. Luftfahrzeug nach einem der Ansprüche 1 bis 11, **dadurch gekennzeichnet, dass** eine erste Bordküche (3) und eine zweite Bordküche (3) mit Abstand in der Richtung der Längsachse (L) angeordnet sind, wobei eine Mehrzahl von Sitzen (2) zwischen den zwei Bordküchen (3) angeordnet ist.

13. Luftfahrzeug nach Anspruch 12, **dadurch gekennzeichnet, dass** die erste Bordküche (3) an einem vorderen Standort in einer Draufsicht eine U-förmige Gestaltung aufweist, und dass die zweite Bordküche (3) an einem hinteren Standort eine T-förmige Gestaltung in einer Draufsicht aufweist.

14. Luftfahrzeug nach einem der Ansprüche 1 bis 13, **dadurch gekennzeichnet, dass** die Bordküche (3) in einem mittleren Bereich (5) des Bodens (1) angeordnet ist.

## Revendications

1. Aéronef comprenant au moins un sol (1) sur lequel une pluralité de sièges (2) est agencée, dans lequel en outre au moins un office (3) est agencé sur le sol (1), dans lequel l'office (3) comprend une pluralité de chariots et/ou de récipients (4) pour de la nourriture et/ou des boissons et/ou d'autres ustensiles, dans lequel le sol (1) présente un axe longitudinal (L) qui est orienté dans la direction de vol de l'aéronef, dans lequel
l'office (3) présente un espace de réception pour une pluralité de chariots et/ou de récipients (4), dans lequel l'espace de réception présente une extension (e) dans la direction de l'axe longitudinal (L) et dans lequel l'extension (e) varie dans la direction (T) horizontalement et perpendiculairement à l'axe longitudinal (L), dans lequel l'extension (e) de l'espace de réception comprend une ou plusieurs sections avec une extension (e) constante plus petite et une ou deux sections avec une extension (e) constante plus grande et que
l'extension (e) dans la section plus grande fait au moins 1,5 fois l'extension (e) dans la section plus petite et dans lequel les sièges sont agencés dans une configuration en V de telle façon que la section plus grande de l'office s'étendant dans la direction longitudinale fasse saillie dans l'espace entre les sièges ou que les sièges fassent saillie dans l'espace entre deux sections plus petites d'office s'étendant dans la direction longitudinale.

2. Aéronef selon la revendication 1, **caractérisé en ce que** l'extension (e) de l'espace de réception est plus grande dans une zone centrale (C) de l'office (3) que dans la zone latérale (S) de l'office (3).

3. Aéronef selon la revendication 2, **caractérisé en ce que** l'office (3) est conçu en forme de T vu en vue de dessus.

4. Aéronef selon la revendication 1, **caractérisé en ce que** l'extension (e) de l'espace de réception est plus grande dans une zone latérale (S) de l'office (3) que dans la zone centrale (C) de l'office (3).

5. Aéronef selon l'une des revendications 1 à 4, **caractérisé en ce que** l'extension (e) dans la section plus grande fait 2 fois l'extension (e) dans la section plus petite.

6. Aéronef selon l'une des revendications 1 à 5, **caractérisé en ce que** deux niveaux sont agencés dans l'office (3) pour recevoir et ranger des chariots et/ou de récipients (4) dans deux hauteurs différentes.

7. Aéronef selon la revendication 6, **caractérisé en ce qu'**un moyen de levage est prévu pour soulever un chariot et/ou un récipient (4) vers le niveau supérieur.

8. Aéronef selon l'une des revendications 1 à 7, **caractérisé en ce qu'**un moyen de traction (6) est prévu pour tirer un chariot et/ou un récipient (4) hors de l'espace de réception.

9. Aéronef selon la revendication 8, **caractérisé en ce que** le moyen de traction (6) est également conçu pour pincer le chariot et/ou récipient (4) dans l'espace de réception.

10. Aéronef selon la revendication 9, **caractérisé en ce que** le moyen de traction (6) est conçu pour un mouvement translationnel et rotationnel combiné pour déplacer le chariot et/ou récipient (4) par le mouvement translationnel du moyen et pour le serrer par le mouvement rotationnel du moyen.

11. Aéronef selon l'une des revendications 1 à 10, **caractérisé en ce qu'**un office (3) ayant une forme en T vu en vue de dessus est agencé adjacent à un office (3) ayant une forme en U vu dans une vue de dessus.

12. Aéronef selon l'une des revendications 1 à 11, **caractérisé en ce qu'**un premier office (3) et un second office (3) sont agencés à distance dans la direction de l'axe longitudinal (L), dans lequel une pluralité de sièges (2) est agencée entre les deux offices (3).

13. Aéronef selon la revendication 12, **caractérisé en ce que** le premier office (3) dans un emplacement avant a une forme en U vu en vue de dessus et que le second office (3) dans un emplacement arrière a une forme en T vu en vue de dessus.

14. Aéronef selon l'une des revendications 1 à 13, **caractérisé en ce que** l'office (3) est agencé dans une zone centrale (5) du sol (1).
